Europäisches Patentamt

European Patent Office

Office européen des brevets

(11) Publication number: **0 340 775**
**A1**

## (12) EUROPEAN PATENT APPLICATION

(21) Application number: **89108075.6**

(22) Date of filing: **05.05.89**

(51) Int. Cl.4: **A22C 17/10 , A22C 13/00**

(30) Priority: **06.05.88 US 191100**
**16.12.88 US 285454**
**24.03.89 US 326560**

(43) Date of publication of application:
**08.11.89 Bulletin 89/45**

(84) Designated Contracting States:
**AT BE DE FR GB IT NL SE**

(71) Applicant: **VISKASE CORPORATION**
**6855 West 65th Street**
**Chicago, Illinois 60638(US)**

(72) Inventor: **Oxley, Jeffrey Allen**
**1351 Auburn Avenue**
**Naperville, Ill. 60565(US)**
Inventor: **Nicholson, Myron Donald**
**13102 South Red Drive**
**Lemont, Ill. 60439(US)**
Inventor: **Huang, Alvin Shin-an**
**692 Lakeside Circle**
**Wheeling, Ill. 60090(US)**
Inventor: **Ramagopal, Rama**
**449 Independence Lane**
**Bolingbrook, Ill. 60439(US)**

(74) Representative: **Weinhold, Peter, Dr. et al**
**Patentanwälte Dr. V. Schmied-Kowarzik**
**Dipl.-Ing. G. Dannenberg Dr. P. Weinhold Dr.**
**D. Gudel Dipl.-Ing. S. Schubert Dr. P. Barz**
**Siegfriedstrasse 8**
**D-8000 München 40(DE)**

(54) **Food casing for making indicia bearing food products, method for producing the casing, method for stuffing the casing and resulting food product.**

(57) A cellulosic casing for making skinless frankfurters has distinguishing indicia such as a pattern of grill marks on one surface of the casing. The indicia is formed by printing in caramel onto the casing surface. The caramel remains on the casing surface and is nondiffusible into the casing. During the stuffing and processing of a food product in the casing, the indicia bearing casing surface is in contact with the food product so the indicia releases and indelibly transfers to the contiguous surface of the food casing. The method of making the casing article, stuffing it and the resulting indicia bearing food product are also disclosed.

FIG. 4

Xerox Copy Centre

# FOOD CASING FOR MAKING INDICIA BEARING FOOD PRODUCTS, METHOD FOR PRODUCING THE CASING, METHOD FOR STUFFING THE CASING AND RESULTING FOOD PRODUCT

The present invention relates generally to means for applying distinguishing marks or indicia to the surface of food products such as sausage and the like. More particularly, the present invention relates to a food casing for manufacturing a skinless sausage wherein the casing includes indicia formed of an edible material and wherein the indicia is transferable to the surface of the sausage stuffed into the casing.

It has been proposed to improve the eye appeal of certain food products such as processed meats by providing the food product with surface ornamentation such as a logo, design or other decorative pattern. For example, eye appeal of skinless sausages, such as frankfurters and the like, is improved by marking the surface to simulate the burn mark pattern caused by grilling the sausage. In one method, the application of the so-called "grill marks" is accomplished by passing the frankfurters over hot wires to brand them. However, this method has not been widely adopted by the meat packing industry.

Casings most commonly used for manufacturing encased food products such as processed meat articles comprise relatively long, thin-walled tubes of regenerated cellulose prepared by extruding and then coagulating a viscose solution. Cellulosic casings of regenerated cellulose are either reinforced with a fibrous web (hereinafter "fibrous casing") or unreinforced. Unreinforced casing generally is used in preparing smaller diameter products such as frankfurters and the like whereas fibrous casings are used in preparing larger diameter products such as bologna and hams.

For convenience in handling, the casings, which may be twenty to seventy meters or more in length, are shirred and compressed to produce what are commonly referred to in the art as "shirred casing sticks." These sticks, which measure about twenty to seventy centimeters in length, may contain upwards of 70 meters or more of casing. Processes for manufacturing cellulosic casings and for subsequently shirring them to produce the shirred sticks are well known in the art and will only be described herein in sufficient detail to facilitate an understanding of the present invention.

Utilizing the casing to apply markings to the surface of a sausage has been attempted. For example, in U. S. Patent No. 2,301,564 an aniline ink is printed on the outside of the casing. During sausage processing operations subsequent to stuffing the ink permeates and passes directly through the casing wall to the surface of the sausage meat. The '564 Patent indicates that a clear outline of the markings are reproduced on the sausage surface. However, it is not believed that the clarity of the marking on the sausage surface will satisfy commercial requirements for sharpness and clarity. For example, tests conducted with conventional water soluble food dyes such as U. S. Government approved food, drug and cosmetic dye Red 40 (molecular weight about 400) were successful in that a pattern of grill marks printed on the outer surface of the casing passed through the casing wall and indelibly transferred to a frankfurter made by stuffing and processing a frankfurter emulsion within the casing. However, the diffusion of a low molecular weight water soluble dye such as Red 40, through the casing wall disperses the dye. The result is that the pattern transferred onto the food product is not as sharp and distinct as the pattern initially printed on the outer surface of the casing. Also, the dye tends to diffuse into the body of the frankfurter which further decreases the sharpness and distinctiveness of the transferred pattern on the surface of the frankfurter. Certain other known coloring materials, such as liquid smoke and synthetic brown dyes, have the same difficulty.

Accordingly, an object of the present invention is to provide a food casing having indicia on one surface thereof which is substantially nondiffusible into the casing and which is indelibly transferable to a food product stuffed into the casing in contact with the surface.

Another object is to provide such a casing in which the indicia is composed of a material which remains on the casing surface to which it is applied and subsequently transfers from that surface directly onto the surface of a food product stuffed into the casing and in contact with the casing surface.

Still another object is to provide such a casing wherein the indicia forms a pattern of grill marks which are transferable to the food product.

A yet further object is to provide a method for making such a food casing.

A still further object is to provide a skinless food product having surface ornamentation derived from indicia located on a casing surface in contact with the food product, and to a method for making such a food product.

In the present invention, the casing used in the manufacture of the encased food product is provided with means for imparting a clear, sharp image of an ornamentation, logo or other desired indicia to the surface of the product processed within the casing.

In this respect, one surface of the cellulosic casing is provided with indicia in mirror image to the pattern desired on the surface of the food product. During stuffing, the casing surface carrying the indicia is brought into direct contact with the food product stuffed into the casing. The indicia material comprises an edible material which releases from the casing surface and transfers to the surface of the food product so that after stuffing and processing a mirror image of the pattern remains on the surface of the product when the casing is removed.

To be effective, the indicia on the casing surface should comprise a coloring material that provides a distinct, sharp pattern. Casing manufacturing and shirring operations performed after application of the indicia material to the casing should not smear or distort the indicia. Otherwise, the pattern, when transferred to the processed sausage, is blurred and/or distorted. The indicia material may be applied in-line during the production of the casing. If this is done, the indicia material must remain on the casing during subsequent handling of the casing including shirring of the casing to produce the shirred stick and the eventual deshirring of the casing to stuff it. However, the indicia material should be releasable from the surface of the casing on stuffing and/or processing so the indicia can transfer to the surface of the food product in contact with the casing.

The indicia material should lie on the surface of the casing on which it was applied and should not diffuse or otherwise substantially penetrate into the casing wall. This will insure that substantially all of the indicia material is available for release and transfer to the food product within the casing, thereby providing as distinct a pattern as possible. It further is necessary for the indicia material to remain on the surface of the food as the casing is removed to make a skinless food product.

Application of the indicia material to the casing can be accomplished by any suitable means such as by stenciling, spraying or printing. A printing operation is preferred and will be described further herein below. For purposes of printing, the indicia material must be transferable from the printing plate and onto the casing surface.

In one aspect, the present invention is characterized by a food casing for making indicia-bearing food products comprising a cellulosic casing having a surface adapted for direct contact with a food product stuffed and processed in the casing; and an indicia material disposed on said surface in a desired ordered pattern extending along said casing, said indicia material being edible and substantially nondiffusible from said surface and into said casing and also being releasable from said surface and indelibly transferable to the contiguous surface of the food product stuffed and processed in the casing.

In a particularly preferred embodiment the indicia comprises an aluminum-organic dye lake and a binder-carrier with the lake dispersed in the binder-carrier and bonded to the first cellulosic surface by the binder-carrier in a moisture insensitive manner to form the indicia. This lake-type indicia is transferable to the contiguous surface of the food product in the presence of water. The binder-carrier is preferably shellac or zein.

In an alternative embodiment the indicia comprises a water soluble dry colorant under layer disposed on the first cellulosic surface and a binder-sealant layer superimposed over and entirely enclosing the colorant layer top surface in adhering relationship, the binder-sealant perimeter outwardly extending beyond the colorant layer extremities so as to directly contact the surrounding first cellulosic surface in adhering relationship therewith, said binder-sealant having a melting point above about $100^\circ$ F and being water insoluble. The binder-sealant covered colorant indicia is substantially completely transferable from the first cellulosic surface to a contiguous edible surface in the presence of moisture.

In this alternative embodiment, the bottom surface of the colorant layer may be in contiguous association with the first cellulosic surface, i.e. an overlay indicia comprising the dry colorant under layer and the binder-sealant over layer. Alternatively, the indicia maybe in the form of a sandwich. In this embodiment a first binder-sealant layer may have its bottom surface adhered to the first cellulosic surface with the under surface of the colorant layer superimposed on the top surface of the first binder-sealant in adhering and nondiffusible relationship therewith. A second binder-sealant layer comprises the aforementioned binder-sealant superimposed over the colorant layer. The outer perimeter of at least one of the first and second binder-sealant layers outwardly extends beyond the colorant layer extremities for direct contact with the surrounding first cellulosic surface. The first binder-sealant also has a melting point above about $100^\circ$ F and is water insoluble. The first binder-sealant and the second binder-sealant may be formed of identical or different materials. In these overlay and sandwich type indicia embodiments, the binder-sealant layers are preferably shellac or zein, and the colorant layer is preferably caramel.

In another preferred embodiment the indicia is selected from natural and synthetic caramel, chocolate and chocolate extracts, carotenoids, carbon black and titanium dioxide. The preferred caramel material is one which is composed of about 20 to about 30% by weight of components having a molecular weight greater than 10,000, about 10 to about 20% by weight of components having a molecular weight of less than 2,000, the remainder being materials having a molecular weight of from 2,000 to 10,000. The just mentioned materials can be used as such or in the form of the sandwich- or overlay type explained above.

3

In another aspect, the invention is characterized by a method of making an indicia-transferring cellulosic food casing comprising applying to the external surface of said food casing an indicia in the form of a repeated ordered pattern composed of an edible coloring material which is substantially nondiffusible from said surface and into said casing and which is indelibly transferable from said surface to the contiguous surface of a food product stuffed and processed in said casing.

The indicia comprises e.g. an aluminum-organic dye lake and binder-carrier, with the lake dispersed in the binder-carrier (i.e. the aforedescribed lake-type indicia) and bonded to the external cellulosic surface by the binder-carrier in a moisture-insensitive manner and transferable to the contiguous surface of the food product in the presence of water.

Alternatively, in this method for making an indicia-transferring cellulosic casing the indicia comprises a water soluble dry colorant under layer on the external cellulosic surface and a binder-sealant layer superimposed over and entirely enclosing the colorant layer top surface in adhering relationship. A binder-sealant perimeter portion outwardly extends beyond the colorant layer extremities so as to directly contact the surrounding external cellulosic surface in adhering relationship therewith. In this method embodiment the bottom surface of the colorant layer may be in contiguous association with the external cellulosic surface, i.e. the overlay indicia type. Alternatively, the indicia may be the previously described sandwich type of indicia.

According to a further preferred alternative the indicia comprises natural and synthetic caramel and the other materials mentioned above together with said caramel, either as such or included in a sandwich- or overlay type indicia.

In still another aspect, the invention comprises a processable food package including a food product encased in a tubular cellulosic casing having an inner cellulosic surface contacting the food product, and a non-food-contacting outer surface. An indicia material is disposed only on and along the food casing inner surface in an ordered, repeated pattern which is a mirror image of a pattern desired on the surface of the food product. The indicia is substantially nondiffusible into the casing from the food contacting inner cellulosic surface such that the outer casing surface remains free of the indicia material. The latter is releasable from the casing inner cellulosic surface and transferable to the contacting surface of the food product such that upon removal of the casing after processing, the food package the indicia is indelibly transferred to the processed food product. The indicia is preferably the aforedescribed lake-type.

Alternatively, the indicia of this processable food package may comprise a water soluble dry colorant under layer in the food casing inner cellulosic surface and a binder-sealant layer superimposed over and entirely enclosing the colorant layer top surface in adhering relationship, with a binder-sealant perimeter portion outwardly extending beyond the colorant layer extremities so as to directly contact the surrounding inner cellulosic surface in adhering relationship therewith. More particularly, the indicia may for example be either the previously described overlay type or the sandwich type.

In yet another aspect, the invention is characterized by a skinless proteinaceous food product of the type which is processed as stuffed material within a casing, said food product having indicia arranged in an ordered pattern on the surface thereof wherein said indicia is substantially nondiffusible into the food product from the surface thereof and is composed of an edible coloring material which is substantially nondiffusible into a said casing and is transferred to said food product from a contacting surface of a said casing during processing of said stuffed material in a said casing.

In a further aspect, the invention is characterized by a method of making an indicia-bearing food product comprising:

a) providing a cellulosic casing having a food product contacting surface which carries indicia composed of an edible coloring material disposed on said surface in an ordered pattern, said coloring material being substantially nondiffusible from said surface into said casing;

b) stuffing a food product into said casing so that the outer surface of the food product is in direct contact with said casing food product contacting surface;

c) processing said food product within said casing to cook the product and indelibly transfer said indicia from said casing surface to the outer surface of the food product; and thereafter

d) removing the casing to provide a skinless food product having a mirror image of the indicia indelibly associated with the outer surface of the skinless food product.

In the invention, the indicia to be transferred to the food product is applied to the casing surface (hereafter sometimes referred to as the "food contacting surface") which comes in direct contact with the food product processed within the casing. Preferably the indicia is applied to the outside of a tubular casing. Thereafter the casing is turned inside out so the indicia is on an inside or food contacting surface. The indicia forms an ordered pattern which extends along the casing. To simulate grill marks, the pattern takes the form of parallel lines extending along the casing transverse to the longitudinal axis of the casing. However, the indicia could be in the form of any desired ornamentation or pattern such as a company name or logo and it could extend along one side or along diametrically opposite sides of the casing.

Water is a constituent of most stuffable food products. Also, many encased food products are processed or cooked with steam or in a high humidity environment such as a smoke house. Accordingly, it is believed that the transfer of the indicia material from the food contacting surface of the casing and onto the surface of the food product stuffed into the casing is facilitated if the indicia material is water dispersible and preferably if it is water soluble.

Indicia material of this type can be incorporated into either a water or solvent based system for purposes of applying it to the casing. In either case, a mirror image of a desired pattern composed of the indicia material is applied to the casing and dried. Thereafter, the moisture in the stuffable food product or in the high humidity processing environment will effect the release of indicia material from the food contacting surface of the casing so that the pattern can transfer directly onto the surface of the food product in contact with the casing and indicia material. Once the release and transfer is effected, the indicia material provides a substantially indelible mark on the surface of the food product which remains even after the casing is removed.

Indicia material suited for use in the present invention is not significantly diffusible into the casing wall so that substantially all the indicia material is available for transfer to the surface of the food product. Examples of nondiffusible coloring materials considered suitable include a natural or synthetic caramel, chocolate and chocolate extracts, a carotenoid such as paprika or saffron, carbon black and titanium dioxide. Among these, caramel based coloring material is the preferred indicia material.

Caramel is a food approved coloring material and is water soluble. It was found that when the caramel is applied to the casing surface it remains substantially on the surface and does not migrate or diffuse to any significant extent into the casing wall. This is attributed to the molecular weight of the caramel which is composed of constituents having molecular weights from below 2,000 to over 10,000. Accordingly, a large portion, if not all, of the caramel which is applied to the surface of the casing is transferable to the food product. Natural or synthetic caramel or other high molecular weight water soluble coloring materials may, for instance, be used provided they are edible.

Paprika, chocolate and chocolate extracts, titanium dioxide and carbon black are examples of nondiffusible coloring materials which have molecular weights lower than caramel but nevertheless are considered suitable for use. These materials are generally not water soluble and for this reason they would not readily diffuse through the casing wall. However, they are water dispersible and would be transferable from the casing to the encased food product.

Application of the indicia material is most easily accomplished by passing the casing through an applicator which prints or otherwise applies a mirror image of the desired pattern onto the outer surface of the casing. Since little, if any, of the indicia material diffuses into the casing, the casing must be inverted for stuffing so that the outside surface of the casing having the mirror image printed pattern becomes the casing inside surface in direct contact with the food product (i.e., the "food contacting surface"). Inverting the casing can be accomplished prior to stuffing or during stuffing. U. S. Patent No. 4,162,557 discloses a method for inverting casing prior to stuffing whereas U. S. Patent No. 4,162,693 discloses a method for inverting casing during stuffing. Both of these patents are incorporated herein by reference.

Application of the indicia material onto the exterior surface of the casing can be accomplished "off-line" after the casing manufacturing process is complete or "in-line" as part of the casing manufacturing process.

Briefly, a regenerated cellulose casing is made by extruding a viscose solution through an annular die into an acid regenerating bath. This coagulates the viscose to form what is commonly referred to as a "gel tube". The moisture content of this gel tube is over 200% based on the weight of the cellulose. In a conventional process, the gel tube is inflated and is passed through a dryer to set the cellulose. The dried casing then is passed in-line through a moisture equalizing chamber where its moisture content is adjusted to facilitate subsequent handling and processing. The in-line dryer and moisture equalizing chamber are hereafter collectively referred to as the "dryer". On exit from the dryer the casing has a moisture content of about 13% to 18% based on the dry weight of cellulose in the casing and is wound flat onto reels.

To practice the present invention, an in-line application of the indicia material can be accomplished at the entrance to the dryer so that the desired pattern is applied to the exterior of the inflated gel tube. Preferably, the application is by a printing means in the form of one or more rolls which are driven by contact with the casing passing into the dryer.

The drying temperature and retention time of the casing in the dryer should be selected to permit the indicia material to dry sufficiently so it does not block, stick or transfer to the opposing layer of casing as the casing is reeled on leaving the dryer. It has been discovered that when caramel-based water soluble indicia material is used, a temperature and retention time sufficient to lower the moisture of the casing to a maximum of 14% based on the weight of dry cellulose is sufficient to eliminate such blocking, sticking or transfer.

If the casing within the dryer rubs against guides or the like in the dryer before the indicia material is sufficiently dry, the printed patterns may smear along the casing. Accordingly, passage of the printed inflated casing through the dryer should be arranged to prevent, as much as possible, a rubbing contact with the walls of the dryer or with guides within the dryer. This can be accomplished by supporting the casing within the dryer on air bearings to avoid as much physical contact as possible with the casing.

The casing can be shirred in a conventional manner with the indicia material on the exterior surface of the casing. If this is done, the casing is inverted during stuffing to place the the indicia material on the inside of the casing and in intimate contact with the food products stuffed into the casing.

As an alternative, the casing with the indicia material on its exterior surface can be inverted and then shirred. This places the indicia material on an inside surface of the casing so there is no need to invert the casing during stuffing.

It is conventional during the course of shirring a cellulosic casing to spray the interior surface of the casing with an aqueous solution. For example, U. S. Patent No. 3,981,046 describes a conventional humidification technique in which an aqueous solution is applied as an internal spray to humidify the casing to raise the moisture content of the casing to a level better suited for shirring and subsequent stuffing. In the event the casing is shirred with the indicia material on the outer surface of the casing, this conventional humidification technique can be used. However, if the casing is inverted prior to shirring, this conventional humidification technique should be altered as discussed below so as to prevent the aqueous solution from degrading the water soluble indicia material.


Drawings

Figure 1 is a schematic representation of part of a cellulosic manufacturing system suitable for making a casing of the present invention;

Figure 2 is a view on an enlarged scale showing an end view of a component preferably used in the manufacturing system;

Figure 3 is a perspective view showing an applicator suitable for applying the indicia material to the casing according to the Figure 1 system;

Figures 4 and 5 are schematic representations of alternate systems for shirring an indicia-containing casing of the present invention;

Figure 6 is a perspective view showing a section of one casing embodiment of the present invention wherein the indicia applied to the outside surface of the casing simulates grill marks;

Figure 7 is a perspective view showing a portion of a skinless food product having surface ornamentation in the form of simulated grill marks as made using the casing of Figure 6;

Figure 8 is a view showing a flattened casing having indicia applied thereto representing a corporate logo; and

Figure 9 is a view showing a skinless frankfurter made using the Figure 8 casing.


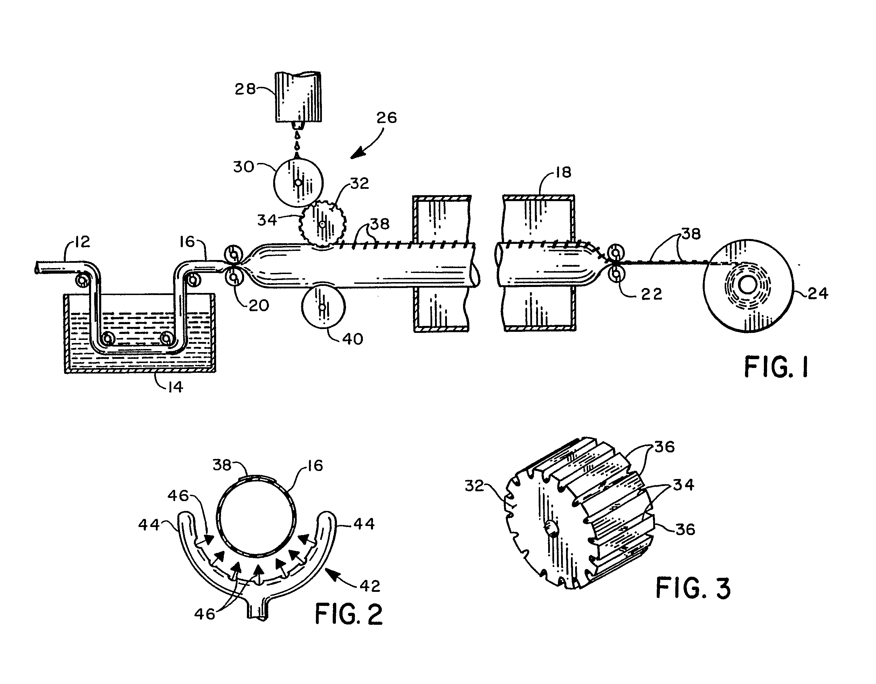

Referring to the drawings, Figure 1 illustrates a portion of a process for manufacturing an indicia containing cellulosic casing of the present invention. In this process, a viscose tube 12 is extruded and passed through one or more solution tanks 14 to coagulate and treat the viscose, thereby forming a cellulosic casing 16. At this stage the casing is in a gel state and has a moisture content of over 200% based on the dry weight of the cellulose in the casing. The casing then passes longitudinally through a dryer 18. Nip rolls 20,22 at the dryer inlet and outlet maintain the casing in the dryer in an inflated condition to prevent diametrical shrinkage and to facilitate drying. On leaving the dryer the casing is wound flat onto a reel 24.

According to one embodiment of the present invention, an applicator means generally indicated at 26, is arranged at the dryer inlet. This applicator 26 is arranged to apply a transferable indicia material in mirror image to a desired pattern to the exterior surface of the gel state casing. As further discussed herein, one of the preferred indicia materials is a dispersion or an aqueous solution of a caramel based coloring. Accordingly, for purposes of illustration, the indicia material is sometimes referred to hereafter as being caramel or caramel based.

The casing manufacturing system which will be described in the following is particularly suitable for the application of indicia materials comprising merely caramel and the like. Possible and preferred modifications of said system in case the indicia comprises an aluminum-organic dye lake and a binder-carrier or is of the overlay or sandwich-type as described above may be taken from two copending European patent applications,both having the title "Food body with surface color indicia "(D-20079 and D-20093) and filed on even date herewith, the contents of which are incorporated herein by reference.

As shown in Figure 1, applicator 26 includes a reservoir 28, an absorbent foam roller 30 and a printing wheel 32. The reservoir 28 contains a supply of the indicia material which is delivered to foam roller 30. Foam roller 30 is in direct contact with printing wheel 32 so that the indicia material on roller 30 is transferred to the printing wheel. The printing wheel 32 has a printing surface 34 engraved with the mirror image of the pattern desired on the food product. In the embodiment as shown, the desired pattern is intended to simulate grill marks to enhance the eye appeal of a skinless frankfurter or the like. For this purpose, the printing wheel surface 34 has a plurality of raised cogs or teeth 36 (Figure 3) for applying an ordered pattern of equally spaced simulated grill marks 38 directly to the exterior surface of the casing in the gel state. Diametrically opposite the printing wheel 32 is an opposing support wheel 40. It should be appreciated that this opposing support wheel 40 also can be a printing wheel.

To function properly, printing wheel 32 must receive and retain a supply of the indicia material from the foam roll 30 and in turn transfer it onto the cellulosic casing outer surface. When applying an aqueous solution of a caramel-based coloring to the casing as the indicia, a suitable printing wheel is a roller made of compressed Nylon fibers.

Smearing of the pattern on application to the exterior surface of the gel state casing is avoided by matching the peripheral speed of the printing wheel 32 to the linear speed of the casing 16. This can be accomplished by using the casing to drive the printing wheel through friction, or by driving the printing wheel with other means (not shown) to provide the proper matching of speeds.

The indicia material is readily applied to the high moisture casing 16 entering the dryer 18. The dryer temperature and retention time should be sufficient to lower the casing moisture content to a level where the indicia material is sufficiently dry to prevent sticking or offsetting onto an opposing layer of the casing in reel 24. When caramel is used, the moisture content of the casing leaving the dryer should be not more than about 14% based on the weight of dry cellulose. At casing moisture above about 14%, the caramel still has sufficient tack to block, stick or offset onto an opposing layer of the casing as the casing is wound onto reel 24. Drying of the indicia material can be accelerated by suspending it in a solvent solution rather than in an aqueous solution.

Within dryer 18, it is conventional to provide guides (not shown) at spaced intervals to support and guide the relatively long spans of casing passing through the dryer. It was found that guides which support the casing by direct contact caused smearing of the just-applied indicia material. One method to prevent this smearing is to maintain an orientation of the casing in the dryer which positions the indicia-marked portion of the casing outer surface away from contact with the guides. A preferred solution is to provide guides in the form of air bearings which avoid physical contact with the casing.

One form of such an air bearing guide for use in the dryer is a substantially y-shaped guide generally indicated at 42 in Figure 2. The arms 44 of the y-shaped guide contain a plurality of air passages (not shown) which direct streams of air 46 against the casing 16 to support the casing and prevent direct physical contact between the casing and guide. The air flow required to support the casing varies depending upon the casing size and the distance between guides. Determination of the proper air flow is well within the skill of the art.

The above-described printing system is for the preparation of an article wherein the bottom surface of the colorant layer is in contiguous association with the cellulose casing substrate. The indicia may also comprise two layers, a colorant under layer and a binder-sealant over layer. As previously explained, another article of this invention has a first binder-sealant layer with its bottom surface adhered to the substrate. The under surface of the colorant layer is superimposed on the top surface of the first binder-sealant layer in adhering and nondiffusible relationship therewith. A second binder-sealant layer comprises the binder-sealant superimposed over the colorant layer. For this embodiment another binder-sealant application system is needed, and the above-described system would be suitable along with a second dryer. This system would be placed upstream the colorant application system and downstream the unwind reel.

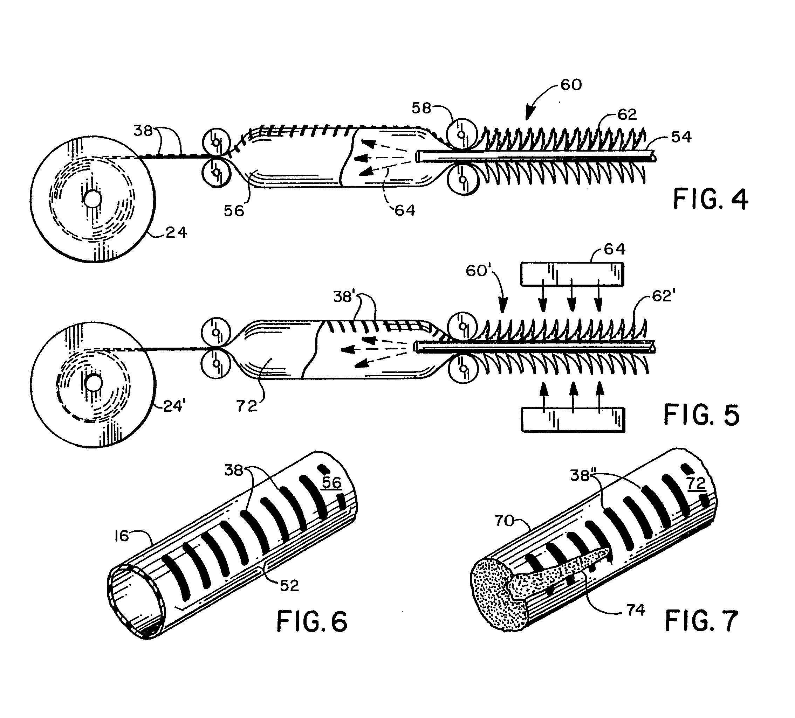

Figure 6 illustrates one casing embodiment of the present invention wherein the indicia 52 is formed of a caramel-based coloring. As shown, the indicia 52 is in the form of a repeated ordered pattern applied to and extending along the casing exterior surface 56. The repeat and order derives from applying the caramel coloring onto casing exterior surface 56 as the casing 16 moves at a relatively constant speed across a printing wheel 32 rotating at the same speed (Figure 1). The particular pattern illustrated in Figure 6 is composed of a plurality of short parallel line segments 38 disposed transverse the longitudinal axis 15 of the casing to simulate grill marks.

The grill marks 38 are disposed on a surface of the casing adapted to come into direct contact with the food product stuffed into the casing. Since the indicia 52 is disposed on an exterior surface 56 of the casing and is substantially nondiffusible into and through the casing wall, the casing must be inverted either before or during stuffing to locate the pattern 52 on the inside of the casing.

Figures 4 and 5 illustrate alternative methods for shirring the indicia-containing casing 16 illustrated in Figure 6. In Figure 4, reel 24 from Figure 1 contains casing 16 having indicia composed of pattern of grill marks 38 on its outer surface. Casing from this reel is unreeled and fed directly to a conventional shirring machine generally indicated at 60. Shirring proceeds in a conventional manner in that the casing 16 is inflated and fed onto a mandrel 54. The casing passes along the mandrel and through a conventional shirring head 58 which gathers the casing into pleats and forms a shirred stick indicated at 62. The shirring mandrel 54 is hollow so that an aqueous shirring solution can be delivered as a spray 64 to the interior of the casing. As mentioned hereinabove, a conventional shirring solution includes a water phase. This is applied in an amount sufficient ro rehumidify the casing in order to raise the moisture content from about the 14% level of the reeled casing to a level suitable for shirring and stuffing. In the shirring method as shown in Figure 4 the total moisture added by the shirring solution would be about 12% to 14% in order to raise the casing moisture content from about the 14% level of the reeled casing to about 26% to 28%.

The shirred stick 62 formed in this fashion contains casing having the indicia e.g., pattern of grill marks 38, on an outside surface. Accordingly, this stick would be inverted during stuffing so as to locate the pattern of grill marks 38 on the inner surface (i.e., the food contacting surface) of the casing. Inversion during stuffing is accomplished by turning and passing the casing through the bore of the stick as generally shown, for example, in U. S. Patents Nos. 4,292,711 and 4,162,693.

In Figure 5, the casing from reel 24 (Figure 1) is first unreeled and broken down into shorter lengths. These shorter lengths are then inverted and rewound onto a new reel 24′ as generally shown in U. S. Patent No. 4,162,557. This locates the indicia composed of the pattern of grill marks 38′ on an inside surface of the casing. The casing is then unreeled from reel 24′ and fed directly to a conventional shirring machine 60′. As an alternative, the '557 patent says the inverted casing can be fed directly to a shirring machine.

If the indicia comprising the pattern of grill marks 38′ is formed of a water soluble material such as a caramel coloring, it has been discovered that the internal spraying of an aqueous shirring solution for rehumidifying the casing should be modified from conventional practice. In particular, the water content of spray 64 is reduced so as not to wash off the indicia material or otherwise destroy the integrity of the pattern. This may be accomplished by adding about 3% to 4% moisture in the internal spray of shirring solution to raise the moisture content of the casing from about the 14% of the reeled casing to about 17% to 18%. This provides the casing with sufficient moisture for shirring. After shirring, an additional 6% to 8% moisture can be externally added by a water applicator 64 which sprays moisture onto the outside surface of the stick 62′ immediately after shirring. This amount of external spray is sufficient to raise the moisture level of the casing to about the 26% to 28% preferred for stuffing.

Since the indicia composed of the pattern of grill marks 38′ is on an inside surface of the inverted casing, the stick produced by shirring the inverted casing can be stuffed in a conventional fashion and is not inverted during stuffing.

The method of applying indicia in-line with the casing manufacturing process as disclosed in Figure 1 is suited for relatively simple indicia patterns such as the grill mark pattern illustrated. However, a slightly different application method is preferred for applying a corporate logo or other indicia involving a design more intricate than the straight lines required to simulate grill marks.

Preferably, application of a more intricate design to the casing is made in an off-line operation so the indicia can be applied while the casing is in a flattened condition. Application to flattened casing will improve the likelihood that a clear sharp image of the more intricate design is applied to the casing.

To apply the indicia material off-line, the high moisture gel casing is dried to about 13% to 18% moisture, flattened and then is wound onto a reel. The reel is then transported to an indicia applying operation where the casing is unwound. As the casing is unwound from the reel, the indicia is applied to the flattened casing. If desired, a conventional peeling aid such as carboxymethyl cellulose (CMC) can be applied to the exterior surface of the gel state casing entering the dryer. Thereafter, the indicia material is applied directly onto the CMC coated surface.

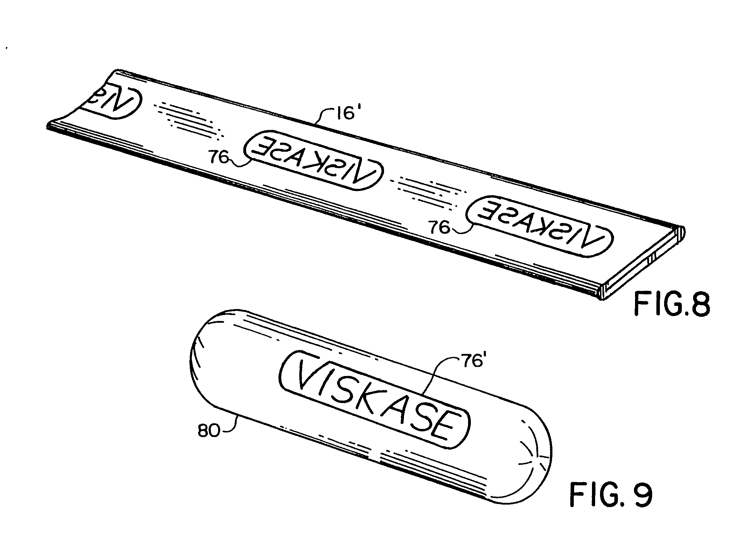

Figure 8 shows a section of flattened casing 16′ wherein the indicia 76 applied to the outer surface of the casing is a mirror image of a corporate logo. The logo extends along the casing in a repeated ordered pattern as the result of applying the indicia material to the casing in a continuous operation as the casing unwinds from its reel. After the indicia material is applied, the casing goes through a second drying operation to set the indicia material, and then is rewound. The additional drying step lowers the casing moisture content to well below 14%. At this low moisture level the casing is too brittle for shirring so it should be rehumidified to about the 14% level prior to commencing the shirring operation.

To demonstrate the invention, an in-line application of grill marks to a frankfurter size cellulose casing was accomplished using the system shown in Figure 1. In this respect, a printing wheel made of compressed Nylon fibers applied a caramel coloring material in a grill mark pattern to the high moisture gel casing entering the dryer. The caramel used was a double strength acid proof caramel color having a solid content of about 51% which is sold by Sethness Products Company as No. DS 400. This caramel color comprises constituents of various molecular weights. In particular, 27 wt.% of the caramel constituents have molecular weights above 10,000; 14 wt.% are in the 2,000-10,000 range; and 59 wt.% are below 2,000. The casing was dried to a moisture content of about 14% based on the weight of dry cellulose and reeled on exit from the dryer. The casing then was shirred with the grill mark pattern on the outside surface as shown in Figure 4 while applying an internal shirring solution to raise the casing moisture level to about 26% to 28%.

During the shirring of cellulosic casing for frankfurters, it is conventional to twist the shirred stick to improve the straightness of the stick. U. S. Patent No. 3,398,069 and No. 4,649,961 disclose methods for radially displacing the pleats of shirred casing one from another by imparting a twist to the stick during shirring. While a method and stick as disclosed in U. S. Patent No. 4,649,961 is preferred, for purposes of this test the casing was shirred without twisting and instead the shirred sticks were supported on dowels to preserve straightness.

The shirred casing then was stuffed with a commercially available frankfurter meat emulsion using a commercial frankfurter stuffing machine known in the art as a Townsend FRANK A MATIC or "FAM" machine. During stuffing the casing is deshirred and inverted through the bore of the stick so the casing turns inside out. This locates the grill marks on the inside surface of the casing.

Conventional operation of the FAM requires that the shirred casing spin about the stuffing horn (see U. S. Patent No. 3,115,668). Consequently, the inverted deshirred casing as it turns into the bore of the shirred stick and passes along the stuffing horn, may twist and seize onto the horn causing the casing to break. To reduce the likelihood of the casing seizing onto the horn and to facilitate the inversion during stuffing, the FAM stuffing horn was coated with a low friction material i.e., Teflon. Also, the shirred casing stick was maintained centered about the stuffing horn during stuffing to insure an annular clearance space between the horn outside diameter and the stick inside diameter for the passage of the casing being deshirred through the stick bore. Maintaining the centering of the shirred stick is accomplished by modifying the follower of the FAM so it fits over and supports the end of the stick.

It is possible to still further reduce the likelihood of the inverted casing seizing on the stuffing horn by using a stick as disclosed in U. S. Patent No. 4,649,961. In this respect, the FAM generally spins the shirred casing about the stuffing horn in a clockwise direction during spinning (looking in a direction into the stuffing horn). A stick as disclosed in U. S. Patent No. 4,649,961 which has its pleat twist oriented in a direction opposite to the FAM spinning direction will counter and offset the tendency of the spinning inverted casing to twist and seize onto the horn.

After stuffing, the stuffed casing was processed at about 20% relative humidity to cook the emulsion and the casing was removed to produce skinless frankfurters bearing the desired grill mark indicia. It was found that substantially all the caramel coloring material transferred from the casing to the surface of the frankfurter so that only a slight stain of caramel residue remained on the casing. Moreover, the grill marks on the skinless frankfurters were found to be indelible in that they could not be removed by manual rubbing and remained intact even after a further cooking of the skinless frankfurter in boiling water. Thus, even after boiling, the skinless frankfurters have the eye appeal of grilled frankfurters.

As a further demonstration, casing from reel 24 was inverted and then shirred according to the arrangement illustrated in Figure 5. The internally sprayed shirring solution, including carboxymethyl cellulose (CMC) as a peeling aid was applied at a rate calculated to raise the moisture content of the casing about 4% (i.e., to about 18% based on the weight of dry cellulose) and to apply CMC to the interior of the casing at the rate of about 3.2 mg/100 in². After shirring, an additional 8% moisture was added to the external surface of the casing. The shirred casing was stuffed with a frankfurter emulsion using the FAM machine in a conventional manner, after which the stuffed casing was processed to cook the emulsion, and the casing was removed to produce skinless frankfurters. It was found that while the grill marks did transfer to the frankfurter, the marks were not as clearly defined as in the previous tests. It is speculated this is due in part to the application of the aqueous shirring solution directly onto the casing surface containing the water soluble grill marks. However, the transferred grill marks are indelible in that they cannot be rubbed off and survive boiling of the frankfurter.

Another caramel found suitable for use is Sethness Products Company No. 858. This is similar to DS 400 except it is sold in powdered form and can be used in a 50 wt.% aqueous solution (i.e., 50% by weight caramel powder and 50% by weight water).

It has been found that a shirred ready-to-stuff casing having the caramel coloring indicia material preferably should be stuffed within a week of shirring. If stored for longer periods in a ready-to-stuff condition, the caramel coloring material is solubilized by the moisture in the casing and starts to bleed along the casing surface and offset to an adjacent pleat. The result on stuffing is a blurred, distorted and less defined image appearing on the skinless food product.

The storage period can be increased by lowering the moisture content of the casing although stuffing at less than optimum moisture levels risks an increase in the breakage rate of the casing. It also has been found that the storage period can be increased by mixing the caramel coloring with additives to render the caramel less soluble. For example, mixing the caramel with Kymene has been found to allow storage of a ready-to-stuff casing for two weeks and more without encountering the aforesaid bleeding and offsetting of the caramel coloring material. Kymene is a cationic resin sold by Hercules Chemical Company. A suitable mixture for rendering the caramel coloring less soluble comprises 35 wt.% water, 35 wt.% No. 858 caramel powder and 30 wt.% Kymene.

Another type of casing customarily used in food processing comprises short cut lengths of fibrous casing ranging up to six feet in length. These casings are sold in a relatively dry state and are soaked in water just prior to stuffing to provide the required moisture content. Accordingly, the aforesaid storage period limitations would not exist if the caramel coloring is applied to this type of casing. However, provision must be made to prevent the caramel coloring from being washed off the casing during soaking.

Figure 7 illustrates a skinless frankfurter 70 made in the Figure 6 casing. The frankfurter has a pattern on its outer surface derived from indicia material applied to the casing in which the frankfurter was made. In the embodiment shown, the pattern simulates grill marks 38″ in mirror image to the pattern 52 on the casing (Figure 6). It should be noted that the grill marks are composed of the caramel coloring material indelibly transferred to the frankfurter surface. As shown in Figure 7, the grill marks 38″ are restricted substantially to the frankfurter surface 72 and the coloring material does not to any significant extent diffuse into the body 74 of the frankfurter beneath the surface.

Figure 9 illustrates a skinless frankfurter 80 made using the casing embodiment of Figure 8. Here the frankfurter carries a more intricate indicia comprising a corporate logo 76′ which is in mirror image to the logo 76 on the casing 16′.

While the invention has been described with respect to the production of skinless frankfurters in shirred cellulosic casing, it should be appreciated that the present invention also can be applied to the processing of any encased proteinaceous food product. For example, the invention can be used to provide other food articles which are processed in cellulosic food casings or wraps with a desired surface ornamentation. Particular examples in addition to skinless frankfurters, include, but are not limited to, cheese, bologna, chopped and formed hams, process hams and poultry products.

In the foregoing procedures, a dark higher molecular weight caramel was used to simulate the dark brown color of grill marks. A lower molecular weight caramel would be used to provide a lighter brown color for the indicia. Other suitable coloring materials can be selected to provide colors for other types of indicia such as corporate logos or designs.

It is not essential that the food product be processed, and the casing removed, prior to the food product reaching the consumer at the retail level. For example, the encased food product can be sold at the retail level wherein the consumer cooks the food product and removes the casing.

Thus, it should be appreciated that the present invention accomplishes its intended objects in providing a casing for making a indicia-bearing skinless food product wherein the casing includes the indicia which is indelibly transferable to the food product processed within the casing.

One preferred embodiment of this invention requires use of lakes, and to understand their characteristics it is necessary to distinguish between dyes and pigments. Dyes are chemical compounds which exhibit their coloring power or tinctorial strength when dissolved in a solvent. Pigments are insoluble colored materials which color by dispersion. A lake is a pigment formed by precipitation and absorption of a dye on an insoluble base. Lakes useful in this invention are prepared from aluminum hydrate and organic dyes, i.e. the dye is absorbed on the hydrate. The exact nature of the absorption is not fully known. However, those skilled in the art understand that the manner of preparation of the aluminum hydrate and the conditions under which the dye is added or absorbed determine the shade, particle size, dispersibility, and even tinctorial strength of the lake. Other important production variables are the temperature, the concentration of the reactants, the final pH of the reaction and the nature and time of mixing.

Although lakes useful in the present invention are characterized as "aluminum lakes", it should be understood that minor portions of other hydrates or salts may be included in the aluminum lake, as for

10

example barium and calcium. Having aluminum hydrate as the dye deposition base, the lakes useful in this invention are insoluble in nearly all solvents at pH less than 9.

Other additives with special properties may be included in the present lakes, for example liquid smoke to impart color, flavor and odor to the indicia.

## Organic Dyes

As will be hereinafter demonstrated, unlaked dyes are not suitable for use in the invention because of their solubility and bleed characteristics. These qualities make dye transfer from a substrate to an edible surface fuzzy and illegible.

Although any organic dye in laked form is functionally suitable for use in the present inventions, there are stringent governmental restrictions on this selection because the indicia formed therefrom is directly adhered to an edible surface. Accordingly, the selected organic dye must be suitable for human consumption, and in the United States must be certified as "food-approved" by the Food and Drug Administration. Organic dyes in this category are generally referred to as "FD&C" types, and the following is a current list of the FD&C colors.

## FD&C Colors

| Designation | Common Name | Chemical Name |
|---|---|---|
| Red No. 3 | Erythrosine | Disodium salt of 9(o-carboxyphenyl) 6-hydroxy-2, 4, 5, 7-tetraiodo-3H-xanthen-3-one. |
| Red No. 40 | None | Disodium salt of 6-hydroxy-5-[(2-methoxy-5-methyl-4-sulfophenyl)azo]-2-naphthalenesulfonic acid. |
| Yellow No. 5 | Tartrazine | 5-oxo-1-(p-sulfophenyl)-4-[(p-sulfophenyl)azo]-2-pyrazoline-3-carboxylic acid, trisodium salt. |
| Yellow No. 6 | Sunset Yellow FCF | Disodium salt of 1-p-sulfophenylazo-2-naphthol-6-sulfonic acid. |
| Green No. 3 | Fast Green FCF | Disodium salt of 4- [4-(N-ethyl-p-sulfobenzyl amino)phenyl]-(4-hydroxy-2-sulfonium phenyl)--methylene-[1-(N-ethyl-N-p-sulfobenzyl)- cyclohexadienimine]. |
| Blue No. 1 | Brilliant Blue FCF | Disodium salt of ethyl [4-[p[ethyl (m-sulfobenzyl) amino]-a-(o-sulfophenyl) benzylidene]-2,5-cyclohexadien-1-ylidene] (m-sulfobenzyl) ammonium hydroxide inner salt. |
| Blue No. 2 | Indigotine | Disodium salt of 5,5$'$-disulfo-3-3$'$-dioxo-$^2$, 2$'$-biindoline. |

EP 0 340 775 A1

It will be appreciated by those skilled in the art that secondary colors may be prepared from the above-listed primary colors to form an organic dye of virtually any desired tint. The resulting secondary color dye may then be used to form an indicia of the desired color through laking. For example, the following is a representative list of brown-type colors which may be formulated by blending FD&C dyes:

| Shade | FD&C Dye | % Blend |
|---|---|---|
| Butterscotch | Yellow #5 | 74 |
| | Red #40 | 24 |
| | Blue #1 | 2 |
| Chocolate | Red #40 | 52 |
| | Yellow #5 | 40 |
| | Blue #1 | 8 |
| Caramel | Yellow #5 | 64 |
| | Red #3 | 21 |
| | Yellow #6 | 9 |
| | Blue #1 | 6 |

Alternatively, brown FD&C dye may be purchased in the premixed form.

It should also be understood that to obtain a desired tint in the indicia, the intensity of an aluminum-organic dye lake may be lightened by several techniques as for example including an FD&C white tint based on titanium dioxide or by adding extending pigments such as barium sulfate.

## Binder-Carrier

The binder-carrier performs several functions in the lake-type indicia embodiment of this invention. Firstly, it acts as a dispersant for the aluminum-organic dye lake, since the dye is insolubilized by the laking process. The aluminum-organic dye lake (usually commercially available in powder form) is thoroughly milled and dispersed in the binder-carrier and ground into small particles on the order of 2-20 microns size, as by mixing and/or high speed homogenization. Then the mixture is applied to the flexible substrate as for example by commercially available printing equipment such as the flexographic or rotogravure types. Alternatively, it may be possible to use screen printing or rotary printing systems.

The binder-carrier also serves to bond the aluminum-organic dye lake to the substrate in the desired indicia. As the indicia must be moisture insensitive, the binder-carrier must be water insoluble. When dried on the substrate, the binder-carrier must also form a physical bond between the aluminum-organic dye lake and the substrate, which bond can withstand shear forces. That is, the bond is preferably abrasion resistant. Those skilled in the art will recognize that in the dried condition, each aluminum-organic dye lake particle is surrounded by the binder-carrier.

A preferred characteristic of the binder-carrier is that it provides strong bonding between the indicia and the substrate, so as to withstand compression due to rolling or stacking of the substrate.

A further requirement of the binder-carrier is that it must be retained on the outer surface of the substrate, and not migrate into the substrate interior. If this were to occur, the binder-carrier would probably carry a portion of the aluminum-organic dye lake under the substrate surface and it would be difficult if not impossible to subsequently transfer this portion of the lake to the edible surface. For this reason, it is preferable to use relatively high molecular weight material as the binder-carrier, which is too big to physically enter the substrate interior.

A still further requirement of the binder-carrier is that it must be capable of substantially complete transfer from the substrate to a contiguous edible surface in the presence of moisture, and carrying the aluminum-organic lake in this transfer. In many end uses of the inventive article, this transfer occurs during elevated temperature processing, i.e. cooking of the food body while encased in the aforementioned substrate in the form of a casing. However, it has been discovered that with at least certain embodiments the transfer from the substrate to an edible surface may be effected at ambient temperature.

The mechanism of the substrate-to-edible surface transfer is not fully understood but is probably due to a difference in the bonding forces between the substrate and the dried mixture of aluminum-organic dye lake and binder-carrier ("substrate bonding") on one hand, and between the edible surface and the dried mixture ("edible surface bonding") on the other hand. Apparently, the edible surface bonding sufficiently exceeds the substrate bonding for substantially complete transfer of the indicia from the substrate to the edible surface. As used herein, "substantially complete transfer" means that the transferred indicia covers substantially the entire area of edible surface in contiguous contact with the area covered by the original indicia on the substrate. It does not necessarily mean that substantially all of the mixture forming the substrate indicia is transferred to the edible surface.

The preferred binder-carriers in the practice of this invention are shellac and zein. Shellac is an insect-exudate from Asia, and zein is water insoluble prolamine protein from corn gluten. Zein is preferred because it is approved by the U.S. Food and Drug Administration for use in food. Other suitable binder-carriers may include nitrocellulose lacquers, vinyl lacquers, acrylic vinyls and polyamides, preferably in modified form. Certain of these vehicles by themselves do not appear to provide all of the required and preferred characteristics for use as binder-carriers in the practice of this invention. That is, they do not facilitate substantially complete transfer from the substrate to the edible surface, or they do not provide the preferred characteristic of abrasion resistance. However, these deficiencies may be overcome by the use of other resin or plasticizer modifiers as for example ethylene vinyl acetate resin, polyester resin, dibutyl phthalate plasticizer or tricresyl phosphate plasticizer.

Another embodiment of the invention article comprises a cellulose casing substrate having thereon a desired overlay-type indicia entirely surrounded by the substrate. The indicia in turn comprises a water soluble dry colorant underlayer in nondiffusible association with the substrate, and a binder-sealant layer superimposed over and entirely enclosing the colorant layer top surface in adhering relationship with the colorant layer top surface. The perimeter of the binder-sealant layer outwardly extends beyond the extremities of the colorant layer so as to directly contact the surrounding substrate in adhering relationship therewith. This covering and enclosing function of the binder-sealant portion of the indicia is essential to isolate the colorant portions of the indicia from the surrounding environment. The latter includes moisture, and without the protective enclosing cover the water soluble colorant layer would be at least partially dissolved either during handling and storage of the indicia-containing article, or during attempted transfer to the outer surface of the food body.

To perform its protective enclosing function, the binder-sealant is formed of material which is water insoluble. Moreover, the binder-sealant material has a melting point above about 100°F, which represents the warmest ambient temperature to be encountered in handling and storage. This is because the binder-sealant must be physically stable and able to perform its function as the colorant enclosure until placed in contact with the edible food surface for the desired transfer of the complete indicia.

Still another embodiment of the invention article comprising cellulose casing substrate having thereon a desired sandwich-type indicia entirely surrounded by the substrate. The indicia in turn comprises a first binder-sealant layer with its bottom surface adhered to the cellulose casing substrate, a water soluble dry colorant layer with its under surface superimposed on the top surface of the first binder-sealant layer in adhering and nondiffusible relationship therewith, and a second binder-sealant layer. The latter is superimposed over the colorant layer top surface and extends beyond the colorant layer extremities in adhering relationship therewith so as to entirely enclose the colorant layer. The outer perimeter of at least one of the first binder-sealant layer and the second binder-sealant layer outwardly extends beyond the colorant layer extremities so as to directly contact the surrounding cellulosic substrate in adhering relationship for the same reasons discussed in connection with the overlay-type indicia. That is, the perimeters of both the first and second sealant-binder layers adhere to the surrounding substrate, but this is not essential. For example, the first sealant-binder layer outer perimeter may be coextensive with the colorant layer outer perimeter, and also entirely enclosed by the superimposed second sealant-binder layer outer perimeter which is adhered to the surrounding substrate. Conversely, the second sealant-binder layer outer perimeter need only enclose the colorant layer outer extremities and merge outside the colorant layer with the first sealant-binder. In this embodiment the latter extends beyond the colorant layer perimeter and is adhered to the surrounding substrate.

## Transfer in Presence of Water

Either or both the indicia substrate and the edible surface must contain water moisture or the transfer must be in a highly water moisturized environment. This requirement is most conveniently satisfied by the water moisture in edible bodies. Moisture is needed because the indicia is at least partially permeable and moisture appears to be uniquely able to penetrate the indicia and weaken the indicia colorant or binder-sealant bonding to the substrate.

Moisture Insensitive

As used herein, "Moisture Insensitive" means that the indicia will not separate from the substrate to any appreciable extent (as evidenced by significant discoloration of the collected water) when the indicia-containing substrate is held under running ambient temperature cold water from a faucet at rate of about 1 U.S. gallon/minute for 30 seconds. This means that the indicia is not water insoluble.

Example 1

A series of tests were performed which demonstrate the advantages associated with the inclusion of aluminum lake in the indicia-forming mixture to practice this invention.

For these tests, three different FD&C dyes were mixed with zein binder-carrier and used to form indicia in the unlaked and laked forms. The dyes were Red No. 40, Yellow No. 6 and Blue No. 1. The unlaked mixtures were prepared by mixing 7.0 wt.% dye and 93.0% "Aqua Zein" purchased from Freeman Industries, Tuckahoe, New York. The latter in turn comprises 10 wt.% zein and 90 wt.% propylene glycol, water and ammonia. The laked mixtures comprised 20 wt.% lake and 80% zein - solvent; the latter in turn consisted of 20% zein powder, 67.5% N-propyl alcohol, 7.5% water and 5.0% butyl cellosolve, all on a weight basis. The weight ratio zein/FD&C dye was the same or similar in the unlaked Aqua Zein and laked mixtures although the solvent systems were somewhat different. This difference was due to difficulties in solubilizing the unlaked mixture. Another unlaked mixture was prepared by mixing 56% N-propyl alcohol, 20% water, 16% zein powder and 8% Blue No. 1 FD&C dye (all on weight % basis). This N-propyl alcohol type unlaked mixture had the same zein/FD&C dye weight ratio as the unlaked Aqua Zein and laked mixtures. All of those mixtures were considered to have good print strength.

The substrate was nonreinforced transparent cellulosic casing, and the indicia were applied to the casing outer surface by brush to simulate grill marks, as for example illustrated in Figure 6. The grill marks were about 1/8 inch wide, about 1 inch long and about 1 inch apart, center-to-center. All of the unlaked Aqua Zein indicia were applied to the same casing and all of the laked indicia were applied to the same casing. The N-propyl alcohol type unlaked indicia was applied to a separate casing. The solvent was evaporated by hot air, leaving dried indicia.

The indicia-containing cellulose casings were then subjected to the moisture insensitivity test. On the tap water test, there was extensive running of the dye in all unlaked samples (i.e. both the Aqua Zein and the N-propyl alcohol types) so they were moisture sensitive. In contrast there was no loss of color for any of the laked samples so all were moisture insensitive.

The laked and unlaked Aqua Zein indicia-containing cellulose casings were then reverse stuffed with water moisture-containing bologna emulsion and the stuffed package ends tied to eliminate air. Visual inspection of the unprocessed packages revealed a striking difference between the laked and unlaked indicia. The former were as sharp and distinct as they appeared on the casing before stuffing, but the unlaked indicia smeared badly during stuffing. The bologna emulsion-containing packages were then processed in an oven until the meat temperature reached 80°C,i.e. about 2 hours. The so-processed packages were then soaked in room temperature deionized water long enough for the casing to release from the meat, and the casing removed from the underlying meat outer surface for physical examination.

The laked indicia transfer from the cellulose substrate was substantially complete for all three FD&C colors, with no smearing or bleeding out during processing. The unlaked indicia transfer was substantial, but the smearing and bleeding out (observed during stuffing) became more pronounced during processing. It was so extensive that the simulated grill marks were not distinct and tended to run together. In contrast, the laked indicia on the processed meat were sharp and distinct. The results of these tests are summarized in Table A.

15

Table A

| Laked and Unlaked Indicia | | | | |
|---|---|---|---|---|
| Sample No. | Color | Lake Present | Indicia After Stuffing | Indicia After Processing |
| 1 | Red | Yes | Sharp | Sharp |
| 2 | Red | No | Partially Blurred | Partially Blurred |
| 3 | Yellow | Yes | Sharp | Sharp |
| 4 | Yellow | No | Partially Blurred | Partially Blurred |
| 5 | Blue | Yes | Sharp | Sharp |
| 6 | Blue | No | Partially Blurred | Partially Blurred |

It will be apparent from this Example that for this embodiment of the invention, use of lakes is essential to this invention from several standpoints, i.e. to provide moisture insensitivity and sharp, distinct indicia on both the substrate and edible surface.

Example 2

In this example a two color indicia-containing nonreinforced cellulosic food casing was prepared in accordance with this invention, using commercial printing equipment.

One of the indicia-forming colors was prepared by thoroughly mixing 20 pounds of FD&C brown lake (manufactured by Warner-Jenkinson Company) with 80 pounds of zein binder-carrier. The latter comprised 20 parts zein powder, 72.5 parts N-propyl alcohol and 7.5 parts water (weight basis). The mixing procedure was to add the brown lake to the zein under high speed agitation and mix for 30 minutes.

The other indicia-forming color was prepared by mixing 20 pounds of FD&C red lake (also manufactured by Warner-Jenkinson Company) with 80 pounds of zein binder-carrier. The latter comprised 20 parts zein powder, 72.5 parts N-propyl alcohol 7.5 parts water (weight basis). The mixing procedure was the same as employed with the brown lake - zein mixture.

The casing used in this test was regular (no peeling aid) nonreinforced cellulose casing manufactured by Viskase Corporation using the viscose-xanthation process, designated size 24 and having 1.30 inch flat width. This casing was from a production lot but diverted from the production system prior to shirring.

The indicia to be printed on the casing outer wall was the mirror image of ARMOUR® including that company's star logo with the letters about 5/16-inch high (in brown) and the star about 5/16-inch high (brown and red). The indicia repeated every 2 inches along the casing length, with all indicia positioned on the same central axis.

The printing apparatus used to apply the two color indicia was a flexographic press system using separate printing heads for the two colors. The indicia-containing cellulosic casing prepared in the aforedescribed manner was examined on the basis of the aforedescribed criteria and met all requirements. More specifically, the indicia resolution was excellent, and easily readable. The indicia was bonded to the cellulose substrate in a moisture insensitive manner because there was no appreciable separation during the Tap Water Test.

The aforedescribed indicia-containing cellulose casing was then shirred and compressed to a pack ratio of about 82 using commercial equipment of the standard fixed mandrel type operated at production rate of about 1200 ft/min to produce shirred sticks. During shirring, the stick pleat twist was oriented opposite to the FAM spinning direction in accordance with the aforereferenced U.S. Patent 4,649,961. There was no casing breakage during shirring. Visual examination of the indicia after partial deshirring (by hand) indicated no damage.

This example demonstrates that the cellulosic food casing embodiment of invention article can be manufactured with commercial equipment at a commercial production rate.

This example also demonstrates a preferred food casing comprising a shirred cellulosic food casing having on a surface thereof a desired indicia comprising an aluminum -FD&C organic dye lake and zein, with the lake dispersed in the zein and bonded to a surface of the casing by the zein in a moisture insensitive manner to form the indicia. The latter is substantially completely transferable from the casing surface to the water moisturized outer surface of a food body during processing thereof in the casing as demonstrated in the following Example 3.

Example 3

In this example, the Example 2 two-color indicia-containing shirred cellulose casing was used to produce a frankfurter emulsion-containing package having the emulsion in direct contact with the indicia.

This shirred and reverse twisted casing was stuffed with a commercially available frankfurter meat emulsion formulation comprising 50 lbs. beef chuck, 50 lbs. regular pork trim, 2 1/4 lbs. salt, 25 lbs. water, 1 lb. spice and 40 oz. Prague. The stuffing machine was the aforedescribed FAM type operated at about 220 fpm. casing and the stuffing horn was Teflon-coated. During stuffing the casing was deshirred and inverted through the bore of the stick so the casing turned inside out. This located the processable moisturized frankfurter emulsion in direct contact with the indicia.

This example demonstrates that the frankfurter emulsion-cellulose casing processable food package embodiment of the invention can be prepared with commercial equipment using a commercial production rate.

This example also demonstrates a preferred processable food package comprising a cellulosic casing filled with water moisture-containing processable food having its water moisturized outer surface in direct contact with the casing inner surface, wherein the latter is a substrate for an aluminum-organic dye lake and binder-carrier. The lake is dispersed in the binder-carrier and bonded to the casing inner surface by the binder-carrier in a moisture insensitive manner as a desired indicia. The latter is substantially completely transferable from the casing inner surface to the water moisturized food outer surface during processing thereof in the casing, as demonstrated in the following Example 4.

Example 4

In this example, the Example 3 frankfurter emulsion-indicia containing cellulose casing package was used to produce frankfurter with the desired two color indicia on its outer surface.

The aforedescribed package was cooked in a smoke house at 180° F using 25% relative humidity until the internal temperature reached 160° F, then water showered for 10 minutes for cooling to about 40° F. The casing was then hand-peeled.

During hot processing, the indicia simultaneously substantially completely transferred from the casing inner surface to the moisture-containing frankfurter outer surface. This was apparent because visual inspection of the frankfurter outer surface revealed substantially complete coverage of the indicia contact area by either of the two colors. Moreover the indicia definition on the frankfurter surface was very clear, although the colors were somewhat less bright than the original indicia on the cellulose casing outer surface. Examination of the peeled casing revealed substantially complete transfer of the indicia from the casing surface to the frankfurter surface. There was no loss of indicia when the latter was hand-rubbed on the frankfurter surface.

In other tests with substantially identical processed packages, the casing was peeled from the frankfurter surface by a commercial-type (Apollo Ranger) peeler at speed of about 500 fpm, and the indicia remained undamaged on the frankfurter surface.

This example demonstrates that the indicia-containing frankfurter edible food embodiment of the invention can be prepared with commercial equipment using a commercial production rate.

This example also demonstrates a preferred edible food product comprising a frankfurter having on its outer surface a desired indicia of aluminum-FD&C brown dye lake and zein, with the lake dispersed in the zein and bonded to the frankfurter outer surface by the zein.

Example 5

In this example, shellac was used as the binder-carrier instead of zein as used in the previous examples.

The indicia-forming color was prepared by mixing 20 lbs. of FD&C brown lake with 80 lbs. of shellac, the latter comprising 20% food grade dewaxed white shellac and 80% normal propyl alcohol.

The substrate was the same type of regular (no peeling aid) nonreinforced cellulose casing used in Example 2.

The indicia to be printed on the casing outer wall was the mirror image of grill marks 5/16 inch high, 3/32 inch wide and repeated every 3/4 inch along the casing length, as for example shown in Figure 6.

The printing apparatus used to apply the shellac-containing indicia was the same flexographic press system used in Example 2, and the printing procedure was as previously described.

The indicia-containing cellulosic casing prepared in the aforedescribed manner was examined on the basis of the aforedescribed criteria and met all requirements. More specifically, the indicia resolution was excellent and easily readible. The indicia was bonded to the cellulose substrate in a moisture insensitive manner because there was no appreciable separation during the Tap Water Test.

The aforedescribed indicia-containing cellulose casing with shellac binder-carrier was shirred and compressed to a pack ratio of about 82 in the same manner as Example 2. There was no casing breakage during shirring and visual examination of the shirred stick indicia (by inspection of hand-deshirred casing) indicated no damage.

Another portion of this indicia-containing casing was stuffed with bologna and processed in the conventional manner. The casing was hand-peeled from edible food outer surface and examination revealed that indicia transfer was 100%. There was no loss of indicia when the bologna was hand rubbed.

These tests demonstrate that from a functional standpoint, shellac is fully equivalent to zein as a binder-carrier in the practice of this invention.


Example 6


In these tests it was demonstrated that transfer of indicia from nonreinforced cellulose casing substrate to a frankfurter surface in the casing (during processing) is more complete if a peeling aid coating is first applied to the substrate. That is, the transferred indicia color is more distinct if the cellulose substrate has an underlying peeling aid coating. Examination of the substrate after indicia transfer revealed that with the peeling aid coating, essentially no indicia residue remains whereas without the peeling aid coating there is some indicia residue although the indicia transfer was still substantially complete, as previously defined.

The probable reason for this difference is that the peeling aid reduces the substrate bonding, thereby increasing the difference between substrate bonding and edible surface bonding.

In these tests, a thin layer of carboxymethylcellulose peeling aid (about 1.6 mg/100 in$^2$) was applied to the casing external surface from an aqueous solution immediately following casing extrusion and before drying. The coated casing was then dried and the indicia thereafter applied using a flexographic system. The indicia-containing cellulose casing was then shirred in the Example 2 manner, used to produce a frankfurter emulsion-containing package by reverse stuffing as described in Example 3 with a FAM Machine, and processed in accordance with Example 4. Other peeling aids, as previously described, could be used. Accordingly, a preferred embodiment of the invention employs a peeling aid coating on a cellulose casing substrate under the indicia.


Example 7


In this example a brown logo overlay type indicia-containing nonreinforced cellulosic food casing was prepared in accordance with this invention, using commercial printing equipment.

The colorant comprised a 50 wt% caramel-containing aqueous solution prepared by mixing caramel powder (Sethness type 858) in water (solution viscosity 23 seconds as measured with Zahn cup No. 2). The binder-sealant was of two types. One type comprised 20 parts zein, 72 parts isopropyl alcohol solvent and 8 parts water (all on weight basis). The viscosity of this zein binder-sealant solution was 28 seconds. The other type comprised 30 wt% clear shellac and 70 wt% isopropyl alcohol solvent. The viscosity of this shellac binder-sealant solution was 19 seconds.

The casing used in this test was regular (no peeling aid) nonreinforced cellulose casing manufactured by Viskase Corporation using the viscose-xanthation process, designated size 24 having 1.30 inch flat width. This casing was from a production lot but diverted from the production system prior to shirring.

The indicia to be printed on the casing outer wall was the star logo of ARMOUR® Company with the letters about 5/16-inch high and the star about 5/16-inch high. The indicia repeated every 3 inches along the casing length, with all indicia positioned on the same central axis as for example illustrated in Figure 8.

The printing apparatus used to apply the indicia was a flexographic press system. The printing procedure was as described in a copending application (D-20093) using separate printing heads for the caramel underlayer and the binder-sealant overlayer. The flat casing fed to the colorant printing station had about 16 wt% water (bone dry basis). The caramel colorant layer portion of the indicia was dried to about 300°F in first drier and had a thickness of about 0.03 mil. The solvent of the binder-sealant portion of the indicia was evaporated in a second drier at 300°F to provide a binder-sealant layer thickness of about 0.04 mil so that the total thickness of the overlaid indicia was about 0.07 mil.

It will be recognized that the moisture content of the dried indicia-containing cellulose casing is affected by the casing throughput rate, and for the shellac coated indicia-containing article the relationship were as follows: at 100 fpm, 8.5-9.0% $H_2O$; 150 fpm, 9.5-10.0% $H_2O$; and 200 fpm, 10.7-11.0% $H_2O$ (all on bone dry basis). For the zein coated indicia-containing article the relationships were as follows: at 100 fpm, 8.5% $H_2O$; 150 fpm, 10.0% $H_2O$; and 200 fpm, 10-10.5% $H_2O$.

The indicia-containing cellulosic casing prepared in the aforedescribed manner was examined and met all relevant requirements. More specifically, the indicia resolution with each type of binder-sealant was excellent, and easily readable. The binder-sealant overlayer extended about 1/8 inch beyond the outer perimeter of the caramel under layer, and adhered to the cellulose substrate. The indicia-to-substrate bond moisture sensitivity was functionally satisfactory because despite exposure to moisture-containing environments there was no indicia separation prior to transfer to the food surface.

The aforedescribed indicia-containing cellulose casing was then shirred and compressed to a pack ratio of about 82 using commercial equipment of the standard fixed mandrel type operated at a production rate of about 1200 ft/min to produce shirred sticks. Sufficient moisture was added by the shirr spray to increase the water content to about 26 wt%. During shirring, the stick power-twist was oriented opposite to the FAM spinning direction in accordance with the aforereferenced U.S. Patent 4,649,961.

There was excessive breakage and pinholing of the casing during shirring. Further work was needed to identify commercial operating conditions for production of an indicia-containing casing with sufficient moisture in the as-dried article to avoid shirring damage and yet retain the high resolution of the indicia. A series of tests were performed for preparation of both the shellac and zein coated articles to identify optimum operating conditions, by varying the drying temperature and the casing throughput rate. That is, to provide adequate moisture for shirring without casing damage the drier temperature should be relatively low and the throughput rate should be relatively high. Conversely, to insure a dry caramel colorant layer and avoid offsetting during transfer to the food surface, the drier temperature should be relatively high and the throughput rate relatively low. For the particular commercial system used in these experiments the optimum conditions for the zein coated article was a throughput rate of 125 fpm and a drier temperature of 250°F. For the shellac coated article the optimum conditions were a throughput rate of 150 fpm and a drier temperature of 225°F. Shellac is preferred to zein as a binder-sealant for caramel colorant because it is less sensitive to water and thereby provides slightly better protection against indicia offsetting.

This Example demonstrates that the just described embodiment of invention article can be manufactured with commercial equipment at a commercial production rate.

This Example also demonstrates a preferred food casing comprising a shirring cellulosic food casing having on a surface thereof a desired indicia comprising a dry caramel underlayer and a shellac binder-sealant overlayer. The indicia was substantially completely transferable from the casing surface to the water moisturized outer surface of a food body during processing thereof in the casing as demonstrated in the following Example 8.


Example 8


In this Example, the Example 7 brown indicia- containing shirred cellulose casings were used to produce frankfurter emulsion-containing packages having the emulsion in direct contact with the indicia.

These shirred and reverse twisted casings were stuffed with a commercially available frankfurter meat emulsion formulation comprising 50 lbs. beef chuck, 50 lbs. regular pork trim, 2 1/4 lbs. salt, 25 lbs. water, 1 lb. spice and 40 oz. Prague. The stuffing machine was the aforedescribed FAM type operated at about 220 fpm. casing and the stuffing horn was Teflon-coated. During stuffing the casing was deshirred and inverted through the bore of the stick so the casing turned inside out. This located the processable moisturized frankfurter emulsion in direct contact with the indicia.

This Example demonstrates that the frankfurter emulsion-cellulose casing processable food package embodiment of the invention can be prepared with commercial equipment using a commercial production rate.

This Example also demonstrates a preferred processable food package comprising a cellulosic casing filled with water moisture-containing processable food having its water moisturized outer surface in direct contact with the casing inner surface, wherein the latter is a substrate for a desired indicia comprising a water soluble dry colorant layer as for example caramel, with its bottom surface in contiguous and nondiffusible association with the casing inner surface, and a water insoluble binder-sealant layer as for example zein or shellac superimposed over and entirely enclosing the colorant layer top surface in adhering relationship. The binder-sealant perimeter extends outwardly beyond the colorant layer extremities so as to directly contact the surrounding casing inner surface in adhering relationship therewith. The binder-sealant top surface is in contiguous association with the food outer surface. The indicia is substantially completely transferable from the casing inner surface to the water moisturized food outer surface during processing thereof in the casing, as demonstrated in the following Example 9.

## Example 9

In this Example, the Example 8 frankfurter emulsion-indicia containing cellulose casing packages with caramel underlayer and either shellac or zein overlayer were used to produce frankfurters with the desired brown logo indicia on their outer surface.

The aforedescribed packages were cooked in a smoke house at 180° F using 25% relative humidity until the internal temperature reached 160° F, then water showered for 10 minutes for cooling to about 40° F. The casings were then hand-peeled.

During hot processing, the indicia simultaneously substantially completely transferred from the casing inner surface to the moisture-containing frankfurter outer surface. This was apparent because visual inspection of the frankfurter outer surface revealed substantially complete coverage of the indicia contact area by the brown color with each binder-sealant. Moreover, the indicia definition on the frankfurter surface was very clear, although the color was somewhat less bright than the original indicia on the cellulose casing outer surface. Examination of the peeled casings revealed substantially complete transfer of the indicia from the casing surface to the frankfurter surface. There was no loss of indicia when the latter was hand-rubbed on the frankfurter surface.

In other tests with substantially identical processed packages, the casing was peeled from the frankfurter surface by a commercial-type (Apollo Ranger) peeler at speed of about 500 fpm, and the indicia remained undamaged on the frankfurter surface.

This Example demonstrates that the logo indicia-containing frankfurter edible food embodiment of the invention can be prepared with commercial equipment using a commercial production rate

This Example also demonstrates a preferred edible food product comprising a frankfurter having on its outer surface a desired indicia of either shellac or zein binder-sealant layer bonded to the frankfurter outer surface and caramel colorant adhered to the outer surface of the binder-sealant.

## Example 10

The advantages of this invention were illustrated by comparable ARMOUR® star indicia-cellulose casing substrate tests using caramel indicia without a binder-sealant overlayer. That is, all other materials, compositions and treatments were identical to the aforedescribed Examples 7-9.

In the stuffing test, severe bleeding and offsetting was observed with respect to the caramel-only indicia transferred to the processed frankfurter surface. This striking difference between the transferred indicia was solely attributable to the binder sealant layer.

## Example 11

In this Example, a grill mark type indicia-containing nonreinforced cellulosic food casing article was prepared and successfully shirred casing a zein-caramel-zein sandwich type indicia.

The caramel colorant aqueous mixture and the zein binder-sealant mixtures were prepared using the same mixing proportions described in Example 7, and the substrate was the same type of nonreinforced transparent cellulosic casing used in Example 7 except that carboxymethyl cellulose (a peeling aid) was applied to the external surface prior to shirring. The indicia were brown grill marks about 1/8 inch wide, about 1 inch long and about 1 inch apart. The above-described printing system was also used to prepare the sandwich-type indicia, except that another binder-sealant applicator system and drier was used between the unwind reel and the colorant application system. The last applied binder-sealant system was sized to apply a second binder-sealant layer whose perimeter extended outwardly beyond the first binder-sealant and colorant layer extremities so as to directly contact the surrounding cellulosic substrate. This extension was about 1/8 inch beyond the extremities of the underlying layers.

The indicia application system was operated at two different throughput rates (150 fpm and 200 fpm) and two different drier temperatures (225° F and 275° F). The combination of 150 fpm and 225° F was preferred on the basis that the indicia application system at these conditions removed the least amount of casing moisture (i.e. 11.5 wt% $H_2O$ incoming and 10.0% $H_2O$ outgoing) and there was no offsetting of the indicia through the shirring step. The latter was performed without casing damage in the same manner as described in Example 8.

This Example illustrates the preparation of the food casing embodiment comprising a cellulosic substrate having thereon a desired indicia comprising a water insoluble first binder-sealant layer with its bottom surface adhered to the cellulose substrate, a water soluble dry colorant layer with its under surface superimposed on the top surface of the first binder-sealant layer in adhering and nondiffusible relationship with the last-mentioned layer, and a water insoluble second binder-sealant layer superimposed over the colorant layer upper surface and extending beyond the colorant layer extremities in adhering relationship so as to entirely enclose the colorant layer. In this Example the superimposed second binder-sealant layer extended beyond the colorant layer extremities so as to directly contact the cellulose substrate. The Example also illustrates a preferred embodiment of the article wherein a peeling aid coating on the cellulose substrate is provided beneath the first binder-sealant layer bottom surface.

Example 12

The shirred zein sandwich type indicia-containing cellulose casing article of Example 11 was reverse-stuffed with frankfurter emulsion, processed and peeled, all in the same manner as described in Example 9.

Inspection of the grill mark indicia-containing frankfurters revealed that a slight degree of offsetting had occurred even on the frankfurters processed in the casing where offsetting had not occurred on the as-printed cellulose casing substrate. The offsetting was previously observed on the shirred sticks, so was due to moisture penetration from the shirring solution. This slight offsetting could probably be eliminated by adjusting the indicia application process conditions, i.e. lower throughput rate and/or higher drying temperature.

This Example illustrates a processable food package embodiment of the invention including a cellulosic casing filled with water moisture-containing processable food having its water moisturized outer surface in direct contact with the casing inner surface. The latter is a substrate for a desired indicia comprising a water insoluble first binder-sealant layer with its bottom surface adhered to the casing inner surface, a water soluble dry colorant layer with its under surface superimposed on the top surface of the first binder-sealant in adhering and nondiffusible relationship therewith, and a water insoluble second binder-sealant layer superimposed over and entirely enclosing the colorant layer upper surface in adhering relationship so as to entirely enclose the colorant layer. At least one of the first and second binder-sealant perimeters outwardly extends beyond the colorant extremities so as to directly contact the surrounding casing inner surface in adhering relationship therewith.

Example 12 also illustrates a method for making an indicia-containing food product according to this invention, employing a sandwich-type indicia. A casing article is provided having a plasticized flexible inner surface with an indicia comprising a water insoluble first binder-sealant layer having its bottom surface adhered to the casing inner surface in nondiffusible association therewith. A water soluble dry colorant layer is superimposed with its under surface on the top surface of the first binder-sealant layer in adhering and nondiffusible relationship therewith. A water insoluble second binder-sealant layer is superimposed over the colorant upper surface and extends beyond the colorant layer extremities in adhering relationship so as to entirely enclose the colorant layer. At least one of the first and second binder-sealant perimeters extends outwardly beyond the colorant extremities so as to directly contact the surrounding casing inner surface in adhering relationship. The casing is filled with water moisturized processable food such that the latter's outer surface is in direct contact with the second binder-sealant layer. The food-containing casing is processed at elevated temperature to cook the food and simultaneously substantially completely transfer the first binder-sealant, colorant, second binder-sealant sandwich indicia from the casing inner surface to the water moisturized processed food outer surface. The casing is peeled from the indicia-containing processed food outer surface, yielding the food product.

This Example also illustrates an edible food product embodiment comprising a processed food body having on its outer surface a desired indicia sandwich of a water insoluble first binder-sealant layer, a water soluble colorant layer and a water insoluble second binder-sealant layer. The top surface of the second binder-sealant layer is adhered to the food body outer surface, the upper surface of the colorant layer is adhered to the second binder-sealant layer bottom surface, and the top surface of the first binder-sealant layer is adhered to the colorant layer under surface.

**Claims**

1. A food casing for making indicia-bearing food products comprising a length of tubular cellulose casing having a first cellulosic surface adapted for direct contact with a said food product stuffed and processed in said casing, and a second, non-food-contacting surface opposite said first surface; indicia material disposed only on said first cellulosic surface in a desired ordered pattern extending along said casing, said indicia material being edible and substantially nondiffusible from said first cellulosic surface and into said casing such that said second, non-food-contacting surface remains free of said indicia material; and said indicia material being releasable from said first cellulosic surface and indelibly transferable to the contiguous surface of a said food product stuffed and processed in said length of cellulose casing.

2. A food casing as in claim 1 wherein said ordered pattern on said casing surface is a mirror image pattern of the pattern to be transferred to a said food product.

3. A food casing as in any one of claims 1 and 2 wherein said indicia material is water dispersible.

4. A food casing as in any one of claims 1 to 3 wherein said indicia material is selected from the group consisting of natural and synthetic caramel, chocolate and chocolate extracts, carotenoids, carbon black, and titanium dioxide.

5. A food casing as in claim 4 wherein said indicia material is caramel and 27 wt.% of the constituents of said caramel have a molecular weight greater than 10,000, 14 wt.% less than 2,000 and 59 wt.% are in the range of 2,000 to 10,000.

6. A food casing as in any one of claims 1 to 5 wherein said indicia material comprises a plurality of spaced line segments extending transverse the longitudinal axis of said length of cellulosic casing to simulate grill marks.

7. A food casing as in any one of claims 1 to 6 wherein said indicia material is on the exterior surface of said length of cellulosic casing and said length of cellulosic casing is adapted to be inverted during stuffing.

8. A food casing as in any one of claims 1 to 6 wherein said indicia material is on an inside surface of said length of cellulosic casing.

9. A food casing as in any one of claims 1 to 8 wherein said cellulosic casing is a ready-to-stuff casing having a moisture content of at least 20% based on the weight of dry cellulose and is in the form of a shirred stick.

10. A food casing as in any one of claims 1 to 3 and 6 to 9 wherein said indicia comprises an aluminium-organic dye lake and a binder-carrier with said lake dispersed in said binder-carrier and bonded to said first cellulosic surface by said binder-carrier in a moisture insensitive manner to form said indicia, said indicia being transferable to the contiguous surface of said food product in the presence of water.

11. A food casing as in claim 10 wherein said binder-carrier is zein or shellac.

12. A food casing as in any one of claims 1 to 3 and 6 to 9 wherein said indicia comprises a water soluble dry colorant under layer disposed on said first cellulosic surface and a binder-sealant layer superimposed over and entirely enclosing the colorant layer top surface in adhering relationship, and a binder-sealant perimeter portion outwardly extending beyond the colorant layer extremities to directly contact the surrounding first cellulosic surface in adhering relationship therewith, said binder-sealant having a melting point above about 100°F and being water insoluble, the binder-sealant covered colorant being transferable from said first cellulosic surface to the contiguous surface of said food product in the presence of water.

13. A food casing as in claim 12 wherein the bottom surface of said colorant layer is in contiguous association with said first cellulosic surface.

14. A food casing as in claim 12 wherein a first binder-sealant layer has its bottom surface adhered to said first cellulosic surface, the under surface of said colorant layer is superimposed on the top surface of said first binder-sealant layer in adhering and nondiffusible relationship therewith, and a second binder-sealant layer comprises said binder-sealant superimposed over said colorant layer, with the outer perimeter of at least one of said first and second binder-sealant layers comprising said binder-sealant perimeter portion outwardly extending beyond the colorant layer extremities for said direct contact with the surrounding first cellulosic surface, said first binder-sealant also having a melting point above about 100°F and being water insoluble.

15. A food casing as in any one of claims 12 to 14 wherein said binder-sealant is zein or shellac.

16. A skinless proteinaceous food product of the type which is processed as stuffed material within a cellulosic casing, said food product having indicia arranged in an ordered pattern on the surface thereof wherein said indicia is substantially nondiffusible into the food product from the surface thereof and is composed of an edible coloring material which is nondiffusible into a said cellulosic casing and is transferred to said food product from a contacting cellulosic surface of a said casing during processing of said stuffed material in a said casing.

17. A skinless food product as in claim 16 wherein said coloring material is water dispersible.

18. A food product comprising a processed meat product having a surface indelibly marked with the indicia material from the casing of any one of claims 1 to 15 to provide a desired pattern in mirror image to the pattern on said casing.

19. A skinless food product as in any one of claims 16 to 18 wherein said indicia comprises an aluminium-organic dye lake and a binder-carrier, with said lake dispersed in said binder-carrier and bonded to the surface of said food product by said binder-carrier.

20. A skinless food product as in any one of claims 16 to 18 wherein said indicia comprises a water insoluble binder-sealant layer and a water-soluble colorant layer, with the inner surface of said binder-sealant layer bonded to the surface of said food product and said colorant adhered to the outer surface of said binder-sealant, said binder-sealant having a melting point above about 100°F.

21. A skinless food product as in any one of claims 16 to 18 wherein said indicia comprises a sandwich of a first water insoluble binder-sealant layer, a water soluble colorant layer and a second water insoluble binder-sealant layer, wherein the top surface of said second binder-sealant layer is adhered to the surface of said food product outer surface, the upper surface of said colorant layer is adhered to the second binder-sealant layer bottom surface, and the top surface of said first binder-sealant layer is adhered to the colorant layer under surface, said first and second binder-sealants having melting points above about 100°F.

22. A skinless food product as in any one of claims 19 to 21 wherein said binder-carrier or binder-sealant, respectively, is zein or shellac.

23. A method of making an indicia-transferring tubular cellulosic food casing comprising applying to the external cellulosic surface of said food casing an indicia in the form of a repeated order pattern composed of an edible coloring material which is nondiffusible from said surface and into said casing and which, upon inversion of said casing, is indelibly transferable from said surface to the contiguous surface of a food product stuffed and processed in said casing.

24. A method as in claim 23 including:

   a) extruding and coagulating a viscose solution to produce cellulosic casing in a gel state;

   b) drying said gel state casing;

   c) applying said indicia material to an exterior surface of said dried casing.

25. A method as in claim 24 including rehumidifying said casing to at least 14% based on the weight of dry cellulose, and then shirring said casing.

26. A method as in any one of claims 23 to 25 wherein said indicia comprises an aluminium-organic dye lake and a binder-carrier, with said lake dispersed in said binder-carrier and bonded to said external cellulosic surface by said binder-carrier in a moisture-insensitive manner and transferable to said contiguous surface of said food product in the presence of water.

27. A method as in claim 26 wherein said binder-carrier is zein or shellac.

28. A method as in any one of claims 23 to 25 wherein said indicia comprises a water soluble dry colorant under layer on said external cellulosic surface and a binder-sealant layer superimposed over and entirely enclosing the colorant layer top surface in adhering relationship, and a binder-sealant perimeter portion outwardly extending beyond the colorant layer extremities so as to directly contact the surrounding cellulosic surface in adhering relationship therewith, said binder-sealant having a melting point above about 100° F and being water insoluble, the binder-sealant covered colorant indicia being transferable from said cellulosic surface to said contiguous surface of said food product in the presence of moisture.

29. A method as in claim 28 wherein the bottom surface of said colorant layer is in contiguous association with said external cellulose surface.

30. A method as in claim 28 wherein a first binder-sealant layer has its bottom surface adhered to said external cellulosic surface, the under surface of said colorant layer is superimposed on the top surface of said first binder-sealant layer in adhering and nondiffusible relationship therewith, and a second binder-sealant layer comprises said binder-sealant superimposed over said colorant layer, with the outer perimeter of at least one of said first and second binder-sealant layers as said binder-sealant perimeter portion outwardly extending beyond the colorant layer extremities for said direct contact with the surrounding cellulosic surface, said first binder-sealant also having a melting point above about 100° F and being water insoluble.

31. A method of making an indicia-bearing food product comprising:

a) providing a tubular cellulosic casing having a food product contacting cellulosic surface which carries indicia composed of an edible coloring material disposed on said surface in an ordered pattern, said coloring material being substantially nondiffusible from said cellulosic surface into said casing;

b) stuffing a food product into said casing and in direct contact with said food product contacting cellulosic surface;

c) processing said food product within said casing to cook the product and thereby indelibly transferring said indicia in mirror image from said casing to the contiguous surface of the food product; and thereafter

d) removing the casing to provide a skinless food product having said mirror image indicia indelibly associated with the surface of the skinless food product.

32. A method as in claim 31 wherein said indicia is initially disposed on an outside surface of said casing in mirror image to the indicia desired on the surface of the food product and said casing is thereafter turned inside out during the stuffing step (b) for locating the indicia material on an inside surface of the casing in direct contact with said food product.

33. A method as in any one of claims 31 and 32 wherein said indicia comprises an aluminium-organic dye lake and a binder-carrier, with said lake dispersed in said binder-carrier and bonded to said food product contacting cellulosic surface by said binder-sealant in a moisture-insensitive manner.

34. A method as in claim 33 wherein said binder-carrier is zein or shellac.

35. A method as in any one of claims 31 and 32 wherein said indicia comprises a water soluble dry colorant under layer on said food product contacting cellulosic surface and a binder-sealant layer superimposed over and entirely enclosing the colorant layer top surface in adhering relationship, and a binder-sealant perimeter portion outwardly extending beyond the colorant layer extremities so as to directly contact the surrounding cellulosic surface in adhering relationship therewith, said binder-sealant having a melting point above about 100° F and being water insoluble.

36. A method as in claim 35 wherein the bottom surface of said colorant layer is in contiguous association with said cellulosic surface.

37. A method as in claim 35 wherein a first binder-sealant layer has its bottom surface adhered to said cellulosic surface, the under surface of said colorant layer is superimposed on the top surface of said first binder-sealant layer in adhering and nondiffusible relationship therewith, and a second binder-sealant layer comprises said binder-sealant superimposed over said colorant layer, with the outer perimeter of at least one of said first and second binder-sealant layers as said binder-sealant perimeter portion outwardly extending beyond the colorant layer extremities for said direct contact with the surrounding cellulosic surface, said first binder-sealant also having a melting point above about 100° F and being water insoluble.

38. A processable food package comprising:

a) a food product encased in a tubular cellulosic casing, said casing having an inner cellulosic surface contacting said food product and a non-food-contacting outer surface;

b) an indicia material disposed only on and along said food casing inner cellulosic surface in an ordered, repeated pattern which is a mirror image of a pattern desired on the surface of said food product;

c) said indicia material being substantially nondiffusible into said casing from said food contacting inner cellulosic surface such that said outer casing surface remains free of said indicia material; and

24

d) said indicia material being releasable from said casing inner cellulosic surface and transferable to the contacting surface of said food product such that upon removal of said casing after processing said food package said indicia is indelibly transferred to the processed food product.

39. A processable food package according to claim 38 wherein said indicia comprises an aluminum-organic dye lake and a binder-carrier, with said lake dispersed in said binder-carrier and bonded to said food casing inner cellulosic surface by said binder-carrier in a moisture insensitive manner, said indicia being transferable to the contacting surface of said food product in the presence of water.

40. A processable food package according to claim 39 wherein said binder-carrier is zein or shellac.

41. A processable food package according to claim 38 wherein said indicia comprises a water soluble dry colorant under layer on said food casing inner cellulosic surface and a binder-sealant layer superimposed over and entirely enclosing the colorant layer top surface in adhering relationship, and a binder-sealant perimeter portion outwardly extending beyond the colorant layer extremities so as to directly contact the surrounding cellulosic surface in adhering relationship therewith, and the binder-sealant having a melting point above about 100° F and being water insoluble.

42. A processable food package according to claim 41 wherein the bottom surface of said colorant layer is in contiguous association with said food casing inner cellulosic surface.

43. A processable food package according to claim 41 wherein a first binder-sealant layer has its bottom surface adhered to said food casing inner cellulosic surface, the under surface of said colorant layer is superimposed on the top surface of said first binder-sealant layer in adhering and nondiffusible relationship therewith, and a second binder-sealant layer comprises said binder-sealant superimposed over said colorant layer with the outer perimeter of at least one of said first and second binder-sealant layers as said binder-sealant perimeter portion outwardly extending beyond the colorant layer extremities for said direct contact with the surrounding cellulosic surface, said first binder-sealant also having a melting point above about 100° F and being water insoluble.

FIG. I

FIG. 2

FIG. 3

EP 0 340 775 A1

FIG. 4

FIG. 5

FIG. 6

FIG. 7

EP 0 340 775 A1

FIG.8

FIG. 9

EP 0 340 775 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-595797 (SYLVANIA INDUSTRIAL CORPORATION) * page 4, line 42 - page 4, line 74 * | 1, 2, 8, 16, 18, 31, 38 | A22C17/10 A22C13/00 |
| Y | | 7, 12, 13, 20, 23, 28, 29, 32 35, 36, 41, 42 | |
| Y | DE-A-3101424 (BOS) * the whole document * | 7, 23, 32 | |
| Y | US-A-2240348 (PAYTON) * the whole document * | 12, 13, 20, 28, 29, 35, 36 41, 42 | |
| A,D | US-A-2301564 (MENGES) * the whole document * | 1, 3, 16, 17, 18, 31 | TECHNICAL FIELDS SEARCHED (Int. Cl.4) |
| A | GB-A-2142557 (NATURIN-WERK BECKER) * claim 9 * | 4 | A22C B65D A01J |
| A | GB-A-2107361 (SONY CORPORATION) * the whole document * | 10, 19, 26, 33, 39 | |
| A | DE-B-1158528 (SUNDSVALL) | | |
| A | US-A-1958588 (OPPENHEIMER) | | |
| A | US-A-2255810 (REPLOGLE) | | |
| A | FR-A-817095 (WARBURG) | | |

The present search report has been drawn up for all claims

| Place of search | Date of completion of the search | Examiner |
|---|---|---|
| THE HAGUE | 24 JULY 1989 | DE LAMEILLIEURE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)